(19) **Europäisches Patentamt / European Patent Office / Office européen des brevets**

(11) **EP 2 980 554 A1**

(12) **EUROPEAN PATENT APPLICATION**
published in accordance with Art. 153(4) EPC

(43) Date of publication:
**03.02.2016 Bulletin 2016/05**

(21) Application number: **14773018.8**

(22) Date of filing: **19.03.2014**

(51) Int Cl.:
*G01M 11/00* (2006.01)   *C03C 15/00* (2006.01)
*C03C 17/22* (2006.01)   *C03C 19/00* (2006.01)
*G02B 1/11* (2015.01)   *G02F 1/1333* (2006.01)
*G09F 9/00* (2006.01)

(86) International application number:
**PCT/JP2014/057612**

(87) International publication number:
**WO 2014/156906 (02.10.2014 Gazette 2014/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.03.2013  JP 2013073375**

(71) Applicant: **Asahi Glass Company, Limited
Tokyo 100-8405 (JP)**

(72) Inventors:
• **SENOO, Tomonobu**
  **Tokyo 100-8405 (JP)**
• **KOBAYASHI, Yusuke**
  **Tokyo 100-8405 (JP)**
• **OGAMI, Satoshi**
  **Tokyo 100-8405 (JP)**

(74) Representative: **Müller-Boré & Partner
Patentanwälte PartG mbB
Friedenheimer Brücke 21
80639 München (DE)**

(54) **METHOD FOR EVALUATING OPTICAL CHARACTERISTICS OF TRANSPARENT SUBSTRATE, AND OPTICAL DEVICE**

(57)    A method for evaluating optical characteristics of a transparent substrate including first and second surfaces and being positioned on a display surface side of a display device. The method includes evaluating the optical characteristics of the transparent substrate by using two index values including a quantified resolution index value of the transparent substrate and a quantified reflected-image diffusibility index value.

200

θ = 0°

FIG.2

EP 2 980 554 A1

**Description**

TECHNICAL FIELD

The present invention relates to a method for evaluating optical characteristics of a transparent substrate, and an optical device.

BACKGROUND ART

Typically, a cover formed of a transparent substrate is arranged on a display surface side of a display device such as an LCD (Liquid Crystal Display) device.
However, in a case where such transparent substrate is arranged on the display device, an object that is placed in its surrounding is often reflected when an image displayed on the display device is viewed through the transparent substrate. Such reflection not only makes the displayed image difficult to view for the viewer but also causes discomfort for the viewer.
In order to prevent such reflection, a method such as an anti-glare process may be performed to form irregularities on the front surface of the transparent substrate.
It is to be noted that Patent Document 1 discloses a method of evaluating reflection on a display device by using a special device.

Prior Art Document

Patent Document

Patent Document 1: Japanese Laid-Open Patent Publication No. 2007-147343

DISCLOSURE OF THE INVENTION

PROBLEMS TO BE SOLVED BY THE INVENTION

As described above, Patent Document 1 discloses a method of evaluating reflection on a display device by using a special device.
However, optical characteristics that are desired for a transparent substrate are not limited to reduction of reflection. That is, optical characteristics such as resolution and reflected-image of a transparent substrate are to be suitable according to the usage of the transparent substrate. Thus, simply considering a single optical characteristic is insufficient in a case of selecting a transparent substrate. It often becomes necessary to consider multiple suitable optical characteristics at the same time.
The term "resolution" indicates how much an image matches a displayed image when the displayed image is viewed through a transparent substrate. Further, the term "reflected-image diffusibility" indicates how much an image reflected from an object (e.g., illumination lamp) placed at the surrounding of a transparent substrate matches the original object.
Meanwhile, there may be tradeoff between optical characteristics desired for a transparent substrate. For example, an anti-glare process is performed on a front surface of a transparent substrate for increasing reflected-image diffusibility. However, the resolution of the transparent substrate tends to degrade in a case where the anti-glare process is performed. Therefore, selecting a suitable anti-glare process is difficult in a case of performing the anti-glare on a transparent substrate in accordance with multiple optical characteristics.
In view of the above, an embodiment of the present invention is aimed to provide a method for evaluating optical characteristics of a transparent substrate that allows a suitable transparent substrate to be selected according to purpose and usage, and an optical device having a transparent substrate in a suitable range according to the aforementioned evaluation method.

MEANS OF SOLVING THE PROBLEMS

The present invention provides a method for evaluating optical characteristics of a transparent substrate including first and second surfaces and being positioned on a display surface side of a display device. The method includes evaluating the optical characteristics of the transparent substrate by using two index values including a quantified resolution index value of the transparent substrate and a quantified reflected-image diffusibility index value.
In the method of the present invention, the quantified resolution index value may be derived by the steps of:

obtaining luminance of all transmitted light beams by radiating a first light beam from a second surface side of the transparent substrate in a direction parallel to a thickness direction of the transparent substrate, changing a light receiving angle in a range of -90° to +90° relative to the thickness direction of the transparent substrate, and measuring luminance of a transmitted light beam transmitted from the first surface side; obtaining an angle where the luminance of the transmitted light beam becomes largest (peak angle); and calculating the quantified resolution index value T from the following expression (1), Expression (1): Resolution index value T = (luminance of all transmitted light beams - luminance of transmitted light beam at the peak angle) / luminance of all transmitted light beams.

In the method of the present invention, the quantified reflected-image diffusibility index value may be derived by the steps of: radiating a second light beam from the first surface side of the transparent substrate in a direction that is 30 ° relative to the thickness direction of the transparent substrate, changing a light receiving angle in a range of 0° to +90° relative to the thickness direction of the transparent substrate, and measuring a luminance of a reflected light beam reflected from the first surface side; obtaining an angle where the luminance of the reflected light beam becomes largest (peak angle); and calculating the quantified reflected-image diffusibility index value D from the following expression (2), Expression (2): reflected-image diffusibility index value D = (luminance at peak angle +1° ) + (luminance at peak angle -1° )/2/(luminance at peak angle).

In the method of the present invention, the resolution index value and/or the reflected-image diffusibility index value may be obtained by using a goniometer.

In the method of the present invention, the display device may include one of an LCD device, an OLED device, a PDP device, an electronic book, and a tablet-type display device.

In the method of the present invention, the transparent substrate may be formed of a soda-lime glass or an alumino-silicate glass.

In the method of the present invention, at least one of the first and second surfaces of the transparent substrate may be subjected to a chemically-strengthening process.

In the method of the present invention, the first surface of the transparent substrate may be subjected to an anti-glare process.

In the method of the present invention, the anti-glare process may include one of a frosting process, an etching process, a sandblasting process, a wrapping process, and a silica-coating process.

Further, the present invention further provides an optical device including a display device; and a transparent substrate being positioned on a display surface side of the display device, the transparent substrate including first and second surfaces; wherein in a case where the transparent substrate is evaluated by two index values including a quantified resolution index value and a quantified reflected-image diffusibility index value, the transparent substrate is configured to satisfy: resolution index value T ≦ 0.7 and reflected-image diffusibility index value D ≧ 0.6; wherein the quantified resolution index value is derived by the steps of: obtaining luminance of all transmitted light beams by radiating a first light beam from a second surface side of the transparent substrate in a direction parallel to a thickness direction of the transparent substrate, changing a light receiving angle in a range of -90° to +90° relative to the thickness direction of the transparent substrate, and measuring luminance of a transmitted light beam transmitted from the first surface side; obtaining an angle where the luminance of the transmitted light beam becomes largest (peak angle); and calculating the quantified resolution index value T from the following expression (1), Expression (1): Resolution index value T = (luminance of all transmitted light beams - luminance of transmitted light beam at the peak angle) / luminance of all transmitted light beams; wherein the quantified reflected-image diffusibility index value is derived by the steps of: radiating a second light beam from the first surface side of the transparent substrate in a direction that is 30° relative to the thickness direction of the transparent substrate, changing a light receiving angle in a range of 0° to +90° relative to the thickness direction of the transparent substrate, and measuring a luminance of a reflected light beam reflected from the first surface side; obtaining an angle where the luminance of the reflected light beam becomes largest (peak angle); and calculating the quantified reflected-image diffusibility index value D from the following expression (2), Expression (2): Reflected-image diffusibility index value D = (luminance at peak angle +1°) + (luminance at peak angle -1° )/2/(luminance at peak angle).

In the optical device of the present invention, the transparent substrate may be formed of a soda-lime glass or an alumino-silicate glass.

In the optical device of the present invention, at least one of the first and second surfaces of the transparent substrate is subjected to a chemically-strengthening process.

In the optical device of the present invention, the first surface of the transparent substrate may be subjected to an anti-glare process.

In the optical device of the present invention, the anti-glare process may include one of a frosting process, an etching process, a sandblasting process, a wrapping process, and a silica-coating process.

In the optical device of the present invention, the display device may include one of an LCD device, an OLED device, a PDP device, an electronic book, and a tablet-type display device.

EFFECT OF INVENTION

The present invention can provide a method for evaluating optical characteristics of a transparent substrate that allows a suitable transparent substrate to be selected according to purpose and usage.

BRIEF DESCRIPTION OF DRAWINGS

Fig. 1 is a schematic diagram illustrating a flow of a method for obtaining a resolution index value of a transparent substrate according to an embodiment of the present invention;
Fig. 2 is a schematic diagram illustrating an example of a measuring device that is used when obtaining a resolution index value;
Fig. 3 is a schematic diagram illustrating a flow of a method for obtaining a reflected-image diffusibility index value of a transparent substrate according to an embodiment of the present invention;
Fig. 4 is a schematic diagram illustrating an example of a measuring device that is used when obtaining a reflected-image diffusibility index value;
Fig. 5 is a schematic diagram illustrating an example of a relationship between a resolution index value T (horizontal axis) and a reflected-image diffusibility D (vertical axis) obtained from each transparent substrate;
Fig. 6 is a cross-sectional view illustrating an optical device according to an embodiment of the present invention;
Fig. 7 is a graph illustrating an example of a relationship between a determination result of a resolution level by visual observation (vertical axis) and a resolution index value T (horizontal axis) obtained from each transparent substrate;
Fig. 8 is a schematic diagram collectively illustrating transparent substrates each having an reflected-image diffusibility from level 1 to level 12; and
Fig. 9 is a graph illustrating an example of a relationship between a level of a reflected-image diffusiblity by visual observation (vertical axis) and a reflected-image diffusibility index value D (horizontal axis) obtained from each transparent substrate.

EMBODIMENTS FOR CARRYING OUT THE INVENTION

Next, embodiments of the present invention are described.
An embodiment of the present invention provides a method for evaluating an optical characteristic of a transparent substrate including first and second surfaces and being positioned on a display surface side of a display device. The method includes evaluating the optical characteristic of the transparent substrate by using two index values including a quantified resolution index value of the transparent substrate and a quantified reflected-image diffusibility index value.
As described above, optical characteristics such as resolution and reflected-image diffusibility are desired for a transparent substrate positioned on the display side of the display device. Therefore, considering merely a single optical characteristic is often insufficient in a case of selecting a transparent substrate.
On the other hand, according to an embodiment of the present invention, two optical characteristics of a transparent substrate, "resolution index value" and "reflected-image diffusibility index value" are target items that are taken into consideration.
With this method, a transparent substrate can be selected more appropriately because a transparent substrate can be selected by comprehensively considering two optical characteristics.
Further, with this method, quantified values of the resolution and the reflected-image diffusibility of a transparent substrate are used. Therefore, optical characteristics pertaining to resolution and reflected-image diffusibility can be objectively and quantitatively determined without being bound by the subjectivity or the preconception of the observer.
Further, there are often tradeoffs between optical characteristics desired for a transparent substrate, such as between resolution and reflected-image diffusibility. Conventionally, in such a case, selecting an appropriate transparent substrate that can balance two optical characteristics is difficult because there is no index to rely to for the selection.
On the other hand, with the method according to an embodiment of the present invention, two optical characteristics of a transparent substrate can be quantitatively and comprehensively evaluated. Accordingly, with the method according to an embodiment of the present invention, a transparent substrate having optimum optical characteristics can be appropriately selected in accordance with, for example, purpose and usage.
Next, a method for obtaining a resolution index value and a reflected-image diffusibility of a transparent substrate according to an embodiment of the present invention is described with reference to the drawings.

<Regarding resolution index value>

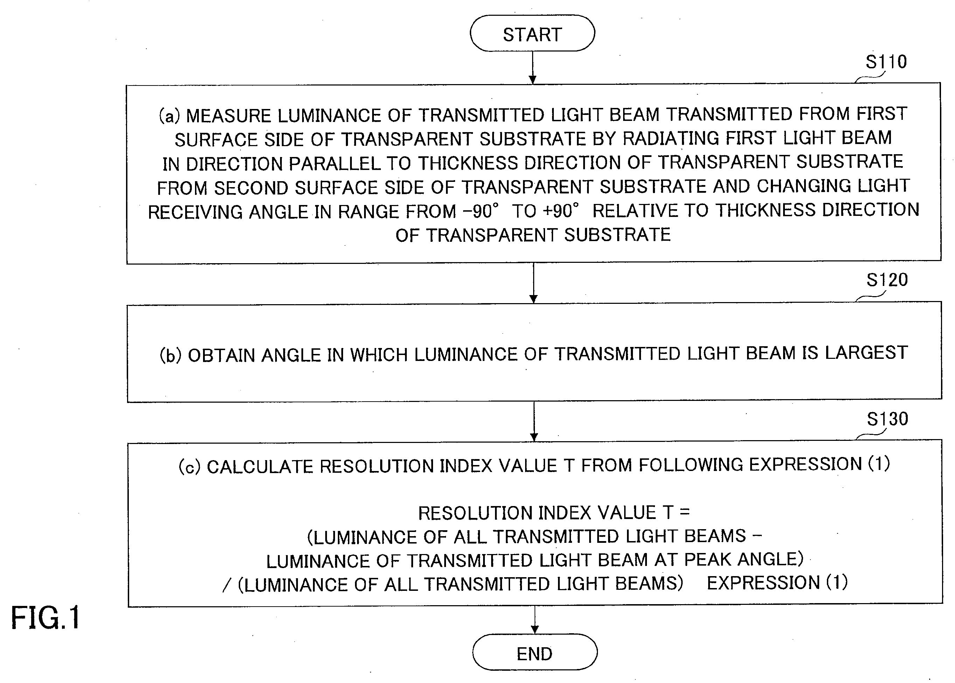

Fig. 1 schematically illustrates the flow of a method for obtaining a resolution index value of a transparent substrate according to an embodiment of the present invention.

As illustrated in Fig. 1, the method for obtaining a resolution index value of a transparent substrate includes the steps of

(a) measuring a luminance of a transmitted light beam that is transmitted from a first surface side of a transparent substrate by radiating a first light beam in direction parallel to a thickness direction of the transparent substrate from a second surface side of the transparent substrate and changing a light receiving angle in a range from -90° to +90° relative to the thickness direction of the transparent substrate (Step S110);
(b) obtaining an angle in which the luminance of the transmitted light beam is largest (peak angle) (Step S120); and
(c) calculating a resolution index value T from the following Expression (1) (Step S130)

```
Expression (1)


RESOLUTION INDEX VALUE T =
(LUMINANCE OF ALL TRANSMITTED LIGHT BEAMS – LUMINANCE OF
TRANSMITTED LIGHT BEAM AT PEAK ANGLE) / (LUMINANCE OF ALL
TRANSMITTED LIGHT BEAMS).
```

Next, each of the steps are described.

<Step S110>

First, a transparent substrate having first and second surfaces facing each other is prepared.

The transparent substrate may be formed with any material as long as the material is transparent. For example, the transparent substrate may be formed of glass or plastic.

In a case where the transparent substrate is formed of glass, the composition of glass is not to be limited in particular. For example, the glass may be soda-lime glass or alumino-silicate glass.

Further, in a case where the transparent substrate is formed of glass, a chemically strengthening process may be performed on the first or/and second surface.

The term "chemically strengthening process" is a generic term referring to a technology of immersing a glass substrate in molten salt including alkali metals and replacing alkali metals (ions) having small ion radii that exist on an outermost surface of the glass substrate with alkali metals (ions) having large ion radii that exist inside the molten salt. With the chemically strengthening process, alkali metals (ions) having larger ion radii than the original atoms are positioned on the surface of the processed glass substrate. Therefore, compressive stress can be applied to the surface of the glass substrate. Thus, the strength of the glass substrate (particularly, cracking strength) is improved.

For example, in a case where the glass substrate includes sodium ion (Na+), the sodium ion is replaced with potassium ion (Ka+) by the chemically strengthening process. Alternatively, in a case where the glass substrate includes, for example, lithium ion (Li+), the lithium ion may be replaced with sodium ion (Na+) and/or potassium ion (Ka+) by the chemically strengthening process.

In a case where the transparent substrate is formed of plastic, the composition of plastic is not to be limited in particular. For example, the transparent substrate may be a polycarbonate substrate.

It is to be noted that an anti-glare process may be performed on the first surface of the transparent substrate before Step S110. The method of performing the anti-glare process is not limited in particular. The anti-glare process may be, for example, a frosting process, an etching process, a sandblasting process, a wrapping process, or a silica-coating process. Instead of performing the anti-glare process directly on the transparent substrate, the same effects may be attained by adhering an anti-glare processed film to the transparent substrate beforehand.

After the anti-glare process is performed on the transparent substrate, the first surface of the transparent substrate may have a surface roughness (roughness average (Ra)) ranging from, for example, 0.05 $\mu$m to 0.5 $\mu$m.

Then, a first light beam is radiated from the side of the second surface of the transparent substrate in a direction parallel to the thickness direction of the transparent substrate, more specifically, in a direction on an angle $\theta = 0° \pm 0.5°$ (also referred to as "direction of angle 0° "). The first light beam is transmitted through the transparent substrate and radiated from the first surface. The angle 6 for receiving the light beam radiated in a direction of angle from the first surface is changed in a range of -90° to +90°, and the luminance of the transmitted light beam is measured at each angle. Although the pitch between the received angle may be determined according to the ability of the measuring device, the pitch is 1° in this embodiment.

<Step S120>

Then, among the angles for the measurement, the angle in which the luminance of the transmitted light beam is largest is assumed as "peak angle", and the luminance at that angle is assumed as "luminance of transmitted light beam at peak angle". Further, the total of the distribution of the luminance of the light beams transmitted through the transparent substrate and radiated from the first surface of the transparent substrate is assumed as "luminance of all transmitted light beams". In this step, the peak angle is obtained. Further, according to the measurement results of Step S110, the luminance of the transmitted light beam at the peak angle can also be obtained. The measurement curve line that smoothly connects the values of the luminance of the transmitted light beams measured in Step S110 is anticipated to be substantially horizontally symmetrical in which the direction of angle 0 (i.e., incident angle) is the center. However, in a case where there is a peak due to an irregular such as a foreign material existing on the surface of the transparent substrate, the peak angle is obtained beforehand.

<Step S130>

Then, the resolution index value T is calculated from the following Expression (1):

```
Expression (1)

 RESOLUTION INDEX VALUE T =
(LUMINANCE OF ALL TRANSMITTED LIGHT BEAMS - LUMINANCE OF
TRANSMITTED LIGHT BEAM AT PEAK ANGLE) / (LUMINANCE OF ALL
TRANSMITTED LIGHT BEAMS.
```

The term "luminance of all transmitted light beams" refers to the integrated value in a case where the light receiving angle ranges from -90° to +90° along a smooth curved line connecting the values of the luminance of the transmitted light beams measured in Step S110. Further, the term "luminance of transmitted light beam at peak angle" refers to the integrated value in a range of $\pm 0.5°$ relative to the peak angle obtained in Step S110 along a curved line of the transmitted light beam measured in Step S110.

As described below, the resolution index value T correlates with a resolution that is determined according to the visual observation of an observer. It is confirmed that the resolution index value indicates behavior similar to human visual perception. For example, a transparent substrate indicated with a high resolution index value T (close to 1) has unsatisfactory resolution whereas a transparent substrate indicated with a low resolution index value T has satisfactory resolution. Accordingly, the resolution index value T can be used as a quantitative index when determining the resolution of a transparent substrate.

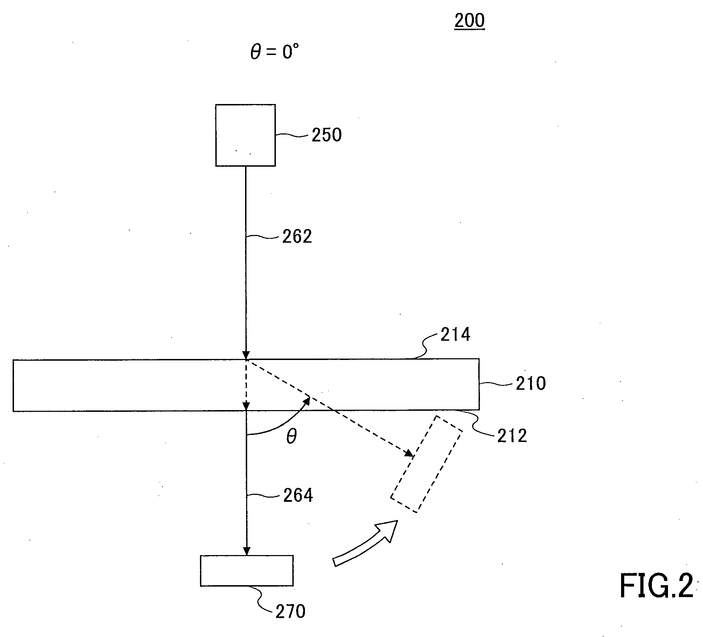

Fig. 2 schematically illustrates an example of a measuring device that is used when obtaining the resolution index value expressed by the above-described Expression (1).

As illustrated in Fig. 2, a measuring device 200 includes a light source 250 and a detector 270. A transparent substrate 210 is positioned inside the measuring device 200.

The transparent substrate 210 includes a first surface 212 and a second surface 214.

The light source 250 radiates a first light beam 262 to the transparent substrate 210. The type of light source 250 is not limited in particular. For example, the light source 250 may be any light source that emits light in the visible light region. For example, the light source 250 may be a halogen lamp.

The detector 270 receives a transmitted light beam 264 radiated from the first surface 212 and detects the luminance of the transmitted light beam 264. The detector 270 is not limited in particular as long as the detector 270 can detect the luminance of the light from the light source being used. For example, a photodiode may be used as the detector 270.

It is to be noted that the transparent substrate 210 is positioned, so that the second surface 214 is on the side of the light source 250 whereas the first surface 212 is on the side of the detector 270. Accordingly, the first light beam detected by the detector 270 is the transmitted light beam 264 transmitted through the transparent substrate 210. In a case where an anti-glare process is performed on one surface of the transparent substrate 210, the surface on which the anti-glare process is performed is the first surface 212 of the transparent substrate 210. That is, in this case, the transparent substrate 210 is positioned inside the measuring device 200, so that the surface on which the anti-glare process is performed is on the side of the detector 270.

Further, a first light beam 262 is radiated in a direction parallel to the thickness direction of the transparent substrate 210 at an angle θ. The angle θ is hereinafter assumed as 0°. In the present application, an angle of 0° includes a range of θ + 0° ±0.5 ° in light of the error of the measuring device.

In the measuring device 200, the first light beam 262 is radiated from the light source 250 to the transparent substrate 210. Then, by positioning the detector 270 at a position illustrated in Fig. 2, that is, a position opposite to the light source interposed by the transparent substrate 210, the transmitted light beam 264 radiated from the side of the first surface 212 of the transparent substrate 210 is detected by the detector 270. Thereby, a 0° transmitted light beam is detected.

Then, the same operation is performed but by changing the angle θ for the detector 270 to receive the transmitted light beam 240 in a range of -90° to +90°.

Accordingly, the transmitted light beams 264 transmitted through the transparent substrate 210 and radiated from the first surface 212 in the range of -90° to +90° (i.e., all transmitted light beams) are detected by using the detector 270.

Then, the "peak angle" and the "luminance of the transmitted light beam at peak angle" are obtained from the distribution of the luminance of all transmitted light beams that have been detected. Then, by using the above-described expression (1), the resolution index value T of the transparent substrate 210 can be obtained.

It is to be noted that the above-described measurement can easily be performed by using a commercially available goniometer (goniophotometer).

<Regarding reflected-image diffusibility index value>

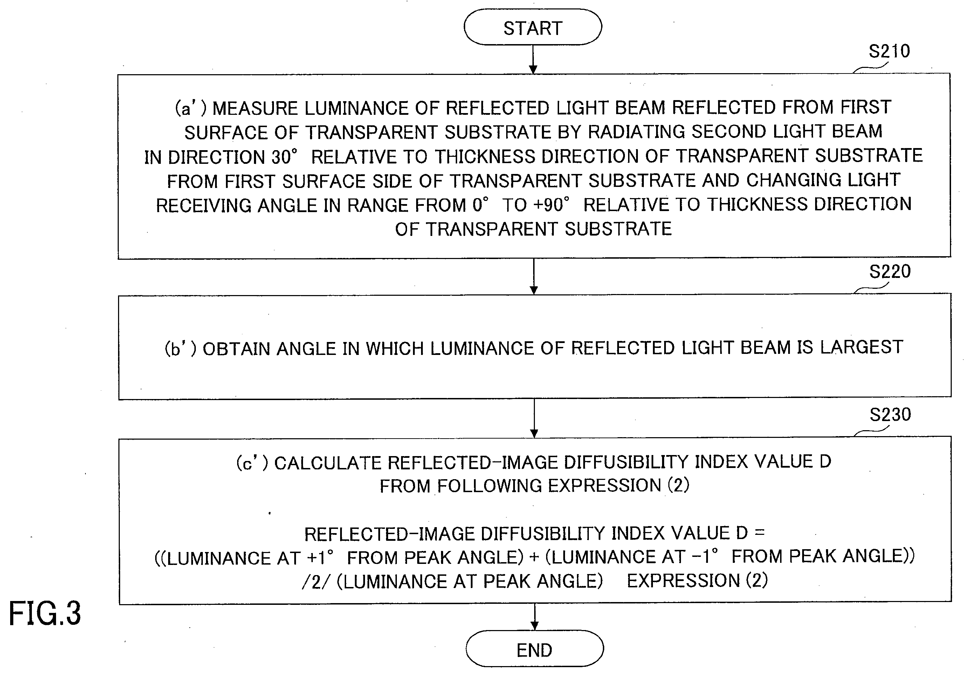

Fig. 3 schematically illustrates the flow of a method for obtaining a reflected-image diffusibility index value of a transparent substrate according to an embodiment of the present invention.

As illustrated in Fig. 3, the method for obtaining a reflected-image diffusibility index value of a transparent substrate includes the steps of:

(a') measuring a luminance of a reflected light beam that is reflected from a first surface side of a transparent substrate by radiating a second light beam in a direction 30 ° relative to a thickness direction of the transparent substrate from the first surface side of the transparent substrate and changing a light receiving angle in a range from 0° to +90° relative to the thickness direction of the transparent substrate (Step S210);
(b') obtaining an angle in which the luminance of the reflected light beam is largest (peak angle) (Step S220); and
(c') calculating a reflected-image diffusibility index value D from the following Expression (2) (Step S230)

```
Expression (2)


REFLECTED-IMAGE DIFFUSIBILITY INDEX VALUE D =

((LUMINANCE AT +1° FROM PEAK ANGLE) + (LUMINANCE AT -1°

FROM PEAK ANGLE))/2/(LUMINANCE AT PEAK ANGLE).
```

Next, each of the steps are described.

<Step S210>

First, a transparent substrate having first and second surfaces facing each other is prepared.

The material, composition or the like of the transparent substrate are the same as those described in Step S110. Thus, further description thereof is omitted.

Then, a second light beam is radiated from the side of the first surface of the transparent substrate in a direction that forms an angle of 30° ± 0.5° relative to the thickness direction of the transparent substrate. The second light beam is reflected from the first surface of the transparent substrate. The angle for receiving the reflected light beam is changed in a range of 0° to +90°, and the luminance of the reflected light beam is measured at each angle.

<Step S220>

Then, the angle in which the luminance of the reflected light beam is largest is obtained. This angle is referred to as "peak angle", and the luminance at that angle is referred to as "luminance at peak angle". Further, the luminance of an angle that is 1° greater than the peak angle is referred to as "luminance +1° from peak angle", and the luminance of an angle that is 1° less than the peak angle is referred to as "luminance -1° from peak angle". The measurement curve line that smoothly connects the values of the luminance of the reflected light beams measured in Step S210 is anticipated to be substantially horizontally symmetrical in which the angle of specular reflection is the center. However, in a case where there is a peak due to an irregular such as a foreign material existing on the surface of the transparent substrate, the peak angle is obtained beforehand to preclude such peak.

<Step S230>

Then, the reflected-image diffusibility index value D is calculated from the following Expression (2):

Expression (2)

REFLECTED-IMAGE DIFFUSIBILITY INDEX VALUE D =

(LUMINANCE AT +1° FROM PEAK ANGLE) + (LUMINANCE AT

-1° FROM PEAK ANGLE) / 2/ (LUMINANCE OF AT PEAK ANGLE).

The term "luminance at peak angle" refers to the integrated value in a range of ±0.5° relative to the peak angle along a smooth curved line connecting the values of the luminance of the reflected light beams. Further, the term "luminance +1° from peak angle" refers to the integrated value in a range of ±0.5° relative to +1° from the peak angle along a curved line of the measured reflected light beam. The term "luminance -1° from peak angle" refers to the integrated value in a range of ± 0.5° relative to -1° from the peak angle along a curved line of the measured reflected light beam.

As described below, the reflected-image diffusibility index value D correlates with a reflected-image diffusibility that is determined according to the visual observation of an observer. It is confirmed that the reflected-image diffusibility index value indicates behavior similar to human visual perception. For example, a transparent substrate indicated with a high reflected-image diffusibility index value D (close to 1) has satisfactory reflected-image diffusibility whereas a transparent substrate indicated with a low reflected-image diffusibility index value D has unsatisfactory reflected-image diffusibility. Accordingly, the reflected-image diffusibility index value D can be used as a quantitative index when determining the reflected-image diffusibility of a transparent substrate.

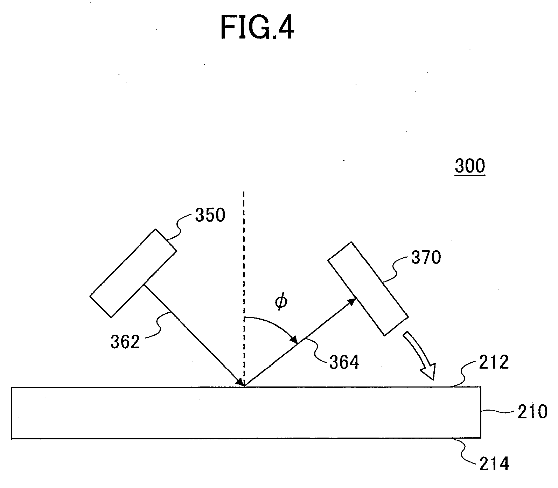

Fig. 4 schematically illustrates an example of a measuring device that is used when obtaining the reflected-image diffusibility index value D expressed by the above-described Expression (2).

As illustrated in Fig. 4, a measuring device 300 includes a light source 350 and a detector 370. The transparent substrate 210 is positioned inside the measuring device 300.

The transparent substrate 210 includes the first surface 212 and the second surface 214.

The light source 350 radiates a second light beam 362 to the transparent substrate 210. The type of light source 350 is not limited in particular. For example, the light source 350 may be any light source that emits light in the visible light region. For example, the light source 350 may be a halogen lamp.

The detector 370 receives a reflected light beam 364 reflected from the first surface 212 and detects the luminance of the reflected light beam 364. The detector 370 is not limited in particular as long as the detector 370 can detect the luminance of the light from the light source being used. For example, a photodiode may be used as the detector 370.

It is to be noted that the transparent substrate 210 is positioned, so that the first surface 212 is on the side of the light source 350 and the detector 370. Accordingly, the second light beam detected by the detector 370 is the reflected light beam 364 reflected from the transparent substrate 210. In a case where an anti-glare process is performed on one surface of the transparent substrate 210, the surface on which the anti-glare process is performed is the first surface 212 of the transparent substrate 210. That is, in this case, the transparent substrate 210 is positioned inside the measuring device 200, so that the surface on which the anti-glare process is performed is on the side of the light source 350 and the detector 270.

Further, a second light beam 362 is radiated in an angle of 30° relative to the thickness direction of the transparent substrate 210. In the present application, an angle of 30° includes a range of 30° ±0.5 ° in light of the error of the measuring device. Similarly, a "peak angle" includes a range of peak angle ±0.5 ° , "luminance +1° from peak angle" includes a range of $\pm 0.5°$ relative to +1° from the peak angle, and "luminance -1° from peak angle" includes a range of $\pm 0.5°$ relative to -1° from the peak angle.

In the measuring device 300, the luminance of a reflected light beam is measured by radiating the second light beam 362 from the light source 350 to the transparent substrate 210 and changing the angle $\phi$ for the detector 370 to measure the reflected light beam 364 in a range of 0° to +90°.

In this process, the peak angle at which the luminance of the light beam received by the detector 370 becomes largest is detected. Thus, the reflected-image diffusibility index value D of the transparent substrate 210 can be obtained according to the peak angle, the luminance +1° from the peak angle, and the luminance -1° from the peak angle by using the above-described expression (2).

It is to be noted that the above-described measurement can easily be performed by using a commercially available goniometer (goniophotometer).

<Evaluation according to two indices>

Next, a case of evaluating optical characteristics of a transparent substrate by using two indices is described.

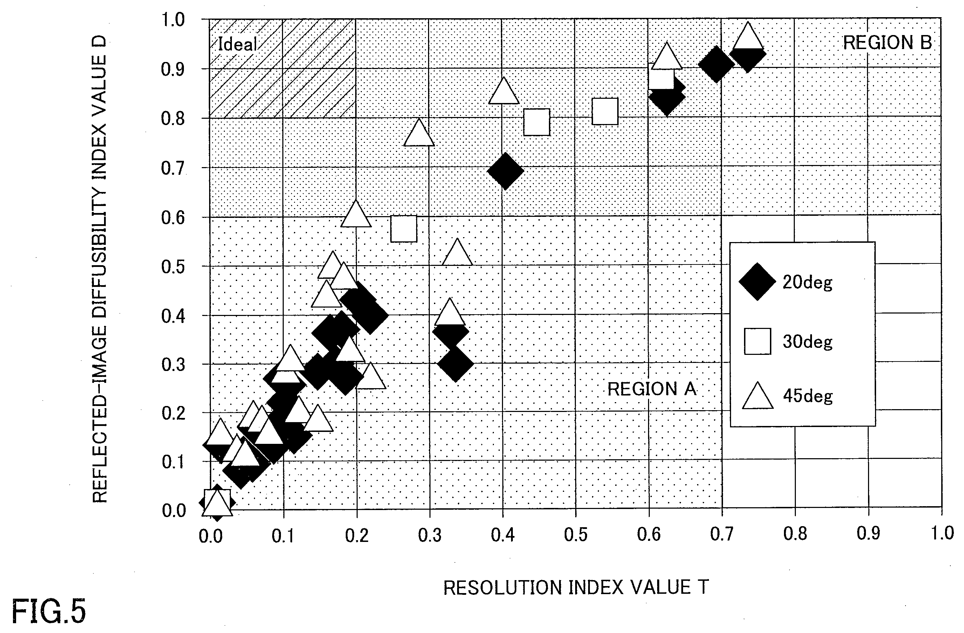

First, in a case of evaluating the resolution and the reflected-image diffusibility of a transparent substrate, a correlation diagram illustrated in Fig. 5 may be used.

Fig. 5 is a schematic diagram illustrating an example of a relationship between resolution index value T (horizontal axis) and a reflected-image diffusibility index value (vertical axis) obtained from each transparent substrate. In Fig. 5, the resolution of a transparent substrate improves the smaller the resolution index value T of the horizontal axis is, and the reflected-image diffusibilty of a transparent substrate improves the larger the reflected-image diffusibility D of the vertical axis is.

Fig. 5 also illustrates the results of measuring the reflected-image diffusibility in a case where the angle of the radiation direction of the second light beam is 20 ° and 45° relative to the thickness direction of the transparent substrate (incident angle).

For reference, an ideal region in the transparent substrate having satisfactory (high) resolution and reflection-image diffusibility is indicated as "Ideal" in the region illustrated with diagonal lines.

In a conventional case where a candidate transparent substrate is selected from various transparent substrates by considering a single optical characteristic (e.g., resolution only), transparent substrates belonging to a region "A" illustrated with hatching are uniformly selected. That is, with such method, transparent substrates having insufficient reflected-image diffusibility would be included as the candidate transparent substrates. Similarly, in a case where a candidate transparent substrate is selected by only considering the reflected-image diffusibility, transparent substrates belonging to a region "B" illustrated with hatching are uniformly selected. Thus, transparent substrates having insufficient resolution would be included in the candidate transparent substrates.

As described above, there is a tradeoff between resolution and reflected-image diffusibility. It is practically impossible to obtain a transparent substrate having both characteristics, that is, a transparent substrate belonging to the region "Ideal". Therefore, an appropriate transparent substrate cannot be selected even if resolution and reflected-image diffusibility are considered separately.

On the other hand, in a case where the correlation diagram of the resolution index value T and the reflected-image diffusibility index value D of Fig. 5 is used, it becomes possible to select an appropriate transparent substrate by considering both optical characteristics at a single time. That is, with this selecting method, a transparent substrate can be appropriately selected according to, for example, purpose and usage. That is, a transparent substrate can be selected to attain the most satisfactory characteristics pertaining to resolution and reflected-image diffusibility.

The range of the resolution index value T and the range of the reflected-image diffusibility D can be selected according to, for example, the distance between a display part and a transparent substrate of a display device using the transparent substrate, or a desired performance. The reflected-image diffusibility for preventing the contour of a reflected image from being visible is particularly important for a transparent substrate that is applied to an optical device used for reading text such as electronic books (a display device including an E-reader, electronic paper). Therefore, it is preferable to select a reflected-image diffusibility index value D that prevents a contour of a reflected image from being visible (e.g., $D \geqq 0.6$) and select a resolution index value T that is high as possible (e.g., $T \leqq 0.7$).

Because two optical characteristics can be comprehensively and quantitatively selected by using the method according to an embodiment of the present invention, a transparent substrate can be selected more appropriately according to purpose, usage, or the like.

Further, with the method according to an embodiment of the present invention, the resolution index value and the reflected-image diffusibility of the transparent substrate can be used as quantified values. Therefore, optical characteristics pertaining to resolution and reflected-image diffusibility can be objectively and quantitatively determined without being bound by the subjectivity or the preconception of the observer.

It is to be noted that measurement results can be steadily obtained by using the peak angle because the use of the peak angle prevents irregularities on a surface of a sample from affecting measurement.

<Regarding optical device according to embodiment of present invention>

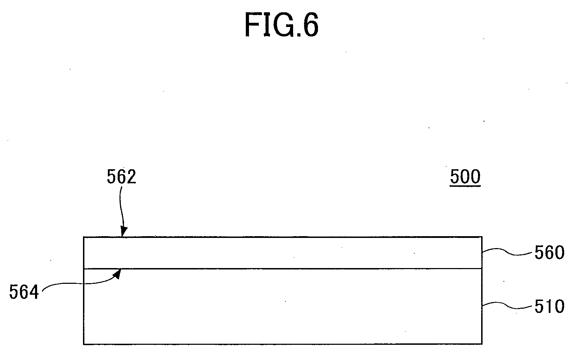

Next, an example of an optical device according to an embodiment of the present invention is described with reference to Fig. 6.

Fig. 6 schematically illustrates a cross section of an optical device according to an embodiment of the present invention.

As illustrated in Fig. 6, an optical device 500 includes a display device 510 and a transparent substrate 560.

The transparent substrate 560 includes a first surface 562 and a second surface 564. The transparent substrate 560 is positioned on a display surface side of the display device 510 in a manner that the second surface is on the side of the display device 510.

It is to be noted that the transparent substrate 560 of the example of Fig. 6 is directly mounted on the display device 510. However, the transparent substrate 560 does not necessarily need to contact the display device 510. For example, another transparent member or a space may be provided between the transparent substrate 560 and the display device 510.

The transparent substrate 560 may be formed of, for example, glass (e.g., soda-lime glass or alumino-silicate glass) or plastic (e.g., polycarbonate). Further, in a case where the transparent substrate 560 is formed of glass, a chemically strengthening process may be performed on at least one of the first surface 562 and the second surface 564.

Further, an anti-glare process may be performed on the first surface 562 of the transparent substrate 560. Because the anti-glare process is already described above, further description thereof is omitted.

The display device 510 includes a display surface (not illustrated). The transparent substrate 560 is positioned to cover the display surface. It is to be noted that any device may be used as the display device 510 as long as the device has a function of displaying an image on the display surface.

The display device 510 may be, for example, an LCD device, an OLED device, a PDP device, an electronic book (a display device including an E-reader, electronic paper), or a tablet-type display device.

It is to be noted that the side of the first surface 562 of the transparent substrate 560 of the optical device 500 is the observing side.

With the optical device 500 the above-described configuration, the transparent substrate 560 has the following optical characteristics:

Resolution index value T $\leqq$ 0.7
Reflected-image diffusibility index value D $\geqq$ 0.6.

It is to be noted that each of the resolution index value T and the reflected-image diffusibility index value D is obtained by the above-described method.

Because the resolution index value T is preferred to be a resolution level (TV lines) of 500 or more according to visual observation, the resolution value index value T is preferably 0.6 or less, and more preferably 0.5 or less.

Because the reflected-image diffusibility index value D is preferred to be a reflected-image diffusibility of level 7 or more, the reflected-image index value is preferably 0.7 or more, and more preferably 0.8 or more.

The transparent substrate 560 having the above-described optical characteristics has satisfactory resolution and reflected-image diffusibility. Thus, the light (image) from the side of the display device 510 is observed relatively clearly.

Accordingly, the optical device 500 including the transparent substrate 560 having the above-described optical characteristics is suitable for an optical device used for reading text such as electronic books (a display device including an E-reader, electronic paper).

Next, the results of actually performing resolution evaluation and reflected-image diffusibility evaluation on a transparent substrate are described.

<Regarding resolution evaluation>

Various transparent substrates were prepared. The resolution of each of the transparent substrates was evaluated by the following method.

First, transparent substrates having various anti-glare processes performed on their first surfaces were prepared. All of the transparent substrates where formed of glass. Transparent substrates having thicknesses ranging from 0.5 mm to 3.0 mm where selected.

Further, a plastic standard test chart (manufactured by DNP Co. Ltd., high accuracy resolution chart type I) was prepared.

Then, each of the transparent substrates was placed on the standard test chart. In this process, the transparent substrate was placed in a manner that the side of the first surface (i.e., anti-glare processed surface) of the transparent substrate is on the opposite side of the standard test chart. It is to be noted that the space between the transparent substrate and the standard test chart was 1 cm.

Then, the standard test was visually observed by way of the transparent substrate for evaluating the limit of bars that can be visually recognized (number of TV lines). Accordingly, the resolution level of each transparent substrate was determined by visual observation. It is to be noted that the maximum number of Tv lines of the standard test chart was 2000 lines.

Then, the operation including the above-described Steps S110-S130 was performed by using a goniophotometer (GC5000L, manufactured by Nippon Denshoku Industries Co. Ltd.), and the resolution index value T of each transparent substrate was calculated by using Expression (1). It is to be noted that the range of the light receiving angle with the measuring device was -85° to +85° in Step S120 due to structural constraints of the measuring device. Such measurement range has little influence on the calculation of the resolution index value T because the amount of transmitted light in the range of -90 ° to -85° and the range of +85° to +90° is substantially zero.

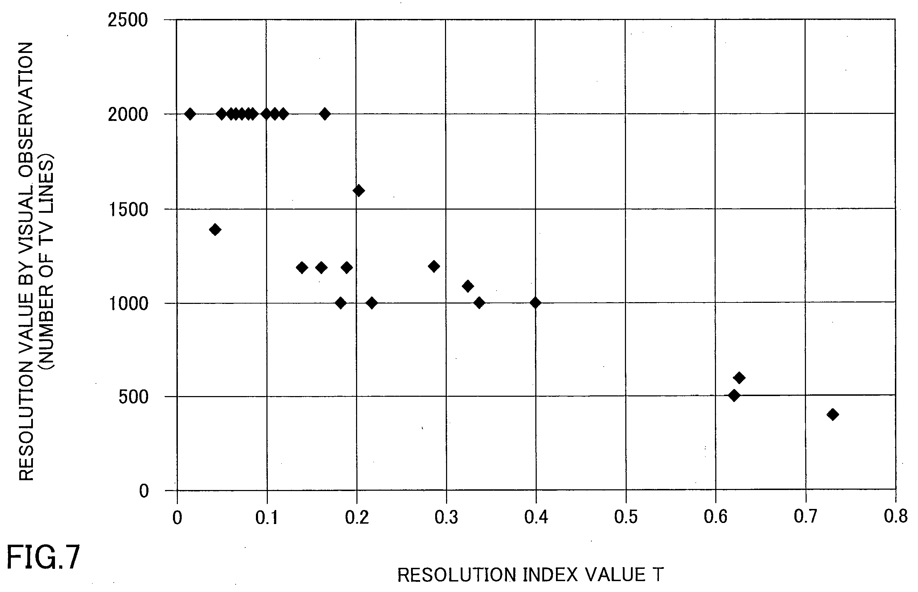

Fig. 7 illustrates an example of a relationship between a determination result of a resolution level by visual observation (vertical axis) and a resolution index value T (horizontal axis) obtained from each transparent substrate.

According to Fig. 7, it can be understood that there is a negative correlation between the resolution level by visual observation and the resolution index value T. In the vicinity where the resolution index value T is 0.1, the resolution levels by visual observation for multiple transparent substrate were saturated at the maximum value of 2000.

These results indicate that the resolution index value T corresponds to an observer's pattern for determining resolution by visual observation and suggest that the resolution of a transparent substrate can be determined by using the resolution index value T. That is, by using the resolution index value T, the resolution of the transparent substrate can be objectively and quantitatively determined.

<Regarding reflected-image diffusibility evaluation>

Then, by using the various transparent substrates subjected to the above-described resolution evaluation, the reflected-image diffusibility of each of the transparent substrates was evaluated by the following method.

First, each of the transparent substrates was visually observed from the side of the first surface (i.e., anti-glare processed surface) and had its reflected-image diffusibility evaluated with a 12 level grading scale from level 1 to level 12. It is to be noted that, although the direction of observation was 45 ° relative to the thickness direction of the transparent substrate, the result is substantially the same as a direction of 30°. Thus, the direction of observation of 45 ° has no significant influence for inspecting correlation.

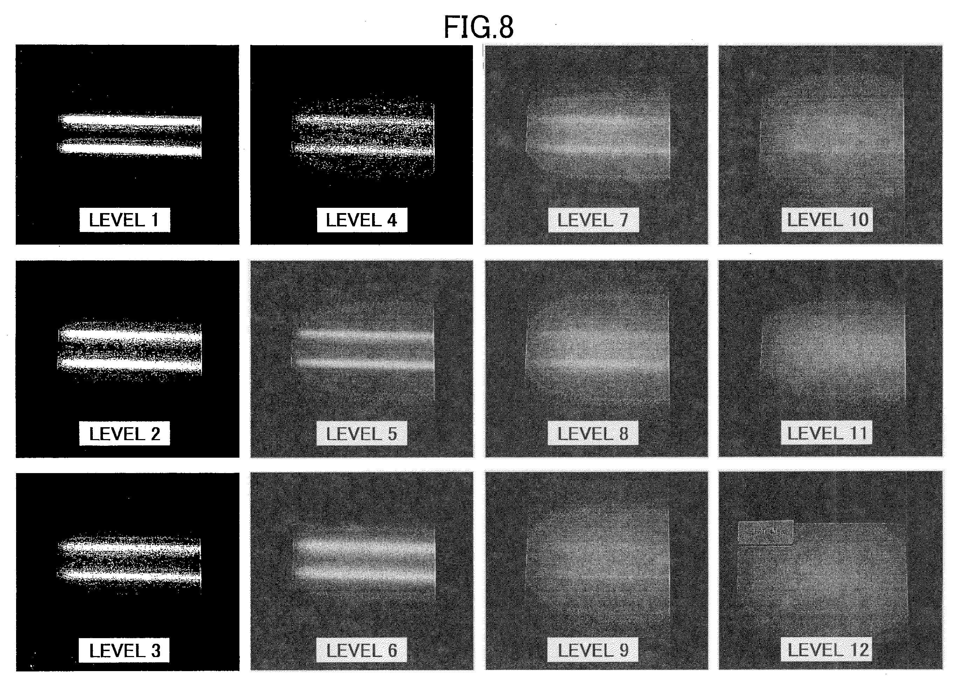

Fig. 8 is a schematic diagram collectively illustrating transparent substrates each having an reflected-image diffusibility from level 1 to level 12. In Fig. 8, the transparent substrates having reflected-image diffusibility corresponding to each level are obtained by being photographed separately.

According to Fig. 8, it can be understood that the reflected images of the transparent substrates gradually become lesser from level 1 to level 12, that is, the reflected-image diffusibility of the transparent substrates tend to improve from level 1 to level 12. It is to be noted that the state of level 1 is obtained from a transparent substrate on which neither surface has been subjected to the anti-glare process.

Then, the operation including the above-described Steps S210-S230 was performed by using a goniophotometer (GC5000L, manufactured by Nippon Denshoku Industries Co. Ltd.), and the reflected-image diffusibility index value D of each transparent substrate was calculated by using Expression (2).

It is to be noted that the range of the light receiving angle with the measuring device was +5° to +85° in Step S210 due to structural constraints of the measuring device. Such measurement range has little influence on the calculation of the reflected-image diffusibility index value D because the amount of reflected light in the range of 0 ° to +5° and the range of +85° to +90° is substantially zero.

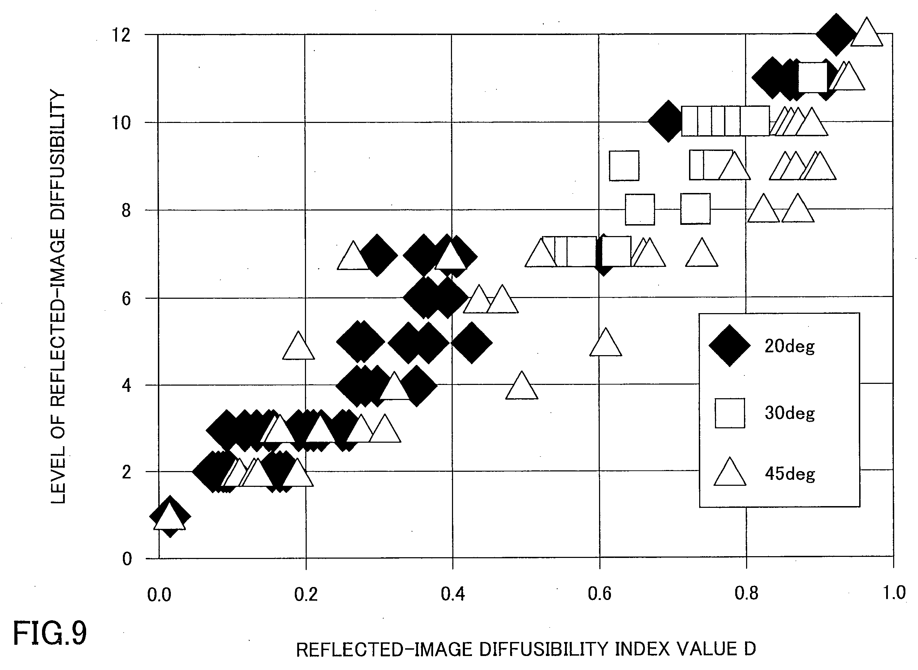

Fig. 9 illustrates an example of a relationship between a level of a reflected-image diffusiblity by visual observation (vertical axis) and a reflected-image diffusibility index value D (horizontal axis) obtained from each transparent substrate. Fig. 9 also illustrates the results for measuring the reflected-image diffusibility index value D in a case where the angle (incident angle) of the radiation direction of the second light beam was 20° and 45° relative to the thickness direction of the transparent substrate.

According to Fig. 9, it can be understood that there is a correlation between the level of the reflected-image diffusiblity by visual observation and the reflected-image diffusibility index value D regardless of the angle of the radiation direction of the second light beam relative to the thickness direction of the transparent substrate, and that the data of 30° is between the data of 20° and the data of 40°. When the level of the reflected-image diffusibility is 7 or more, the correlation coefficients with respect to the reflected-image diffusibility index value D are all high values of 0.95, 0.88, and 0.77 in the cases where the incident angles of the radiation direction of the second light beam were 20°, 30°, and 45° relative to the thickness direction of the transparent substrate. Particularly, it is preferable for the incident angles of the radiation direction of the second light beam to be 20° and 30° relative to the thickness direction of the transparent substrate because the correlation coefficients for both cases surpassed 0.8 when the level of the reflected-image diffusibility is 7 or more.

Considering the usage of the transparent substrate, it is preferable to attain both satisfactory resolution and reflected-image diffusibility at an incident angle that widely ranges from 0° to 60°. Therefore, the evaluation for 30° (which is the intermediate value) is particularly preferable.

These results indicate that the reflected-image diffusiblity index value D corresponds to an observer's pattern for determining the level of reflected-image diffusibility by visual observation and suggest that the reflected-image diffusibility of a transparent substrate can be determined by using the reflected-image diffusibility index value D. That is, by using the reflected-image diffusibility index value D, the reflected-image diffusibility of the transparent substrate can be objectively and quantitatively determined.

Hence, it is confirmed that the resolution index value T and the reflected-image diffusiblity index value D can be used as quantitative indices for the resolution and the reflected-image diffusiblity of a transparent substrate.

INDUSTRIAL APPLICABILITY

The present invention may be applied to a transparent substrate mounted to various display devices such as an LCD device, an OLED device, a PDP device, an electronic book, and a tablet-type display device.

Although embodiments of method for evaluating optical characteristics of a transparent substrate, and an optical device have been described above, the present invention is not limited to these embodiments, but variations and modifications may be made without departing from the scope of the present invention.

The present application is based on Japanese Priority Application No. 2013-073375 filed on March 29, 2013, with the Japanese Patent Office, the entire contents of which are hereby incorporated by reference.

EXPLANATION OF REFERENCE NUMERALS

| | |
|---|---|
| 200 | measuring device |
| 210 | transparent substrate |
| 212 | first surface |
| 214 | second surface |
| 250 | light source |
| 262 | first light beam |
| 264 | transmitted light beam |
| 270 | detector |
| 300 | measuring device |
| 350 | light source |
| 362 | second light beam |
| 364 | reflected light beam |
| 370 | detector |
| 500 | optical device |
| 510 | display device |
| 560 | transparent substrate |
| 562 | first surface |
| 564 | second surface |

**Claims**

1. A method for evaluating optical characteristics of a transparent substrate including first and second surfaces and being positioned on a display surface side of a display device, the method comprising:

   evaluating the optical characteristics of the transparent substrate by using two index values including a quantified resolution index value of the transparent substrate and a quantified reflected-image diffusibility index value.

2. The method for evaluating the optical characteristics of the transparent substrate as claimed in claim 1, wherein the quantified resolution index value is derived by the steps of:

obtaining luminance of all transmitted light beams by radiating a first light beam from a second surface side of the transparent substrate in a direction parallel to a thickness direction of the transparent substrate, changing a light receiving angle in a range of -90° to +90° relative to the thickness direction of the transparent substrate, and measuring luminance of a transmitted light beam transmitted from the first surface side;
obtaining an angle where the luminance of the transmitted light beam becomes largest (peak angle); and calculating the quantified resolution index value T from the following expression (1),

```
Expression (1):
Resolution index value T = (luminance of all transmitted
light beams - luminance of transmitted light beam at the
peak angle) / luminance of all transmitted light beams.
```

3. The method for evaluating the optical characteristics of the transparent substrate as claimed in claim 1 or claim 2, wherein the quantified reflected-image diffusibility index value is derived by the steps of:

radiating a second light beam from the first surface side of the transparent substrate in a direction that is 30° relative to the thickness direction of the transparent substrate, changing a light receiving angle in a range of 0° to +90° relative to the thickness direction of the transparent substrate, and measuring a luminance of a reflected light beam reflected from the first surface side;
obtaining an angle where the luminance of the reflected light beam becomes largest (peak angle); and calculating the quantified reflected-image diffusibility index value D from the following expression (2),

```
Expression (2):

Reflected-image diffusibility index value D = (luminance
at peak angle +1° ) + (luminance at peak angle -
1° )/2/(luminance at peak angle).
```

4. The method for evaluating the optical characteristics of the transparent substrate as claimed in claim 2 or claim 3, wherein the resolution index value and/or the reflected-image diffusibility index value is obtained by using a goniometer.

5. The method for evaluating the optical characteristics of the transparent substrate as claimed in one of claims 1 to 4, wherein the display device includes one of an LCD device, an OLED device, a PDP device, an electronic book, and a tablet-type display device.

6. The method for evaluating the optical characteristics of the transparent substrate as claimed in one of claims 1 to 5, wherein the transparent substrate is formed of a soda-lime glass or an alumino-silicate glass.

7. The method for evaluating the optical characteristics of the transparent substrate as claimed in claim 6, wherein at least one of the first and second surfaces of the transparent substrate is subjected to a chemically-strengthening process.

8. The method for evaluating the optical characteristics of the transparent substrate as claimed in one of claims 1 to 7, wherein the first surface of the transparent substrate is subjected to an anti-glare process.

9. The method for evaluating the optical characteristics of the transparent substrate as claimed in claim 8, wherein the anti-glare process includes one of a frosting process, an etching process, a sandblasting process, a wrapping process, and a silica-coating process.

10. An optical device comprising:

a display device; and

a transparent substrate being positioned on a display surface side of the display device, the transparent substrate including first and second surfaces;

wherein in a case where the transparent substrate is evaluated by two index values including a quantified resolution index value and a quantified reflected-image diffusibility index value, the transparent substrate is configured to satisfy:

resolution index value T $\leqq$ 0.7 and

reflected-image diffusibility index value D $\geqq$ 0.6;

wherein the quantified resolution index value is derived by the steps of:

obtaining luminance of all transmitted light beams by radiating a first light beam from a second surface side of the transparent substrate in a direction parallel to a thickness direction of the transparent substrate, changing a light receiving angle in a range of -90 ° to +90° relative to the thickness direction of the transparent substrate, and measuring luminance of a transmitted light beam transmitted from the first surface side;

obtaining an angle where the luminance of the transmitted light beam becomes largest (peak angle); and calculating the quantified resolution index value T from the following expression (1), Expression (1):

Resolution index value T = (luminance of all transmitted light beams – luminance of transmitted light beam at the peak angle) / luminance of all transmitted light beams;

wherein the quantified reflected-image diffusibility index value is derived by the steps of:

radiating a second light beam from the first surface side of the transparent substrate in a direction that is 30 ° relative to the thickness direction of the transparent substrate, changing a light receiving angle in a range of 0° to +90° relative to the thickness direction of the transparent substrate, and measuring a luminance of a reflected light beam reflected from the first surface side;

obtaining an angle where the luminance of the reflected light beam becomes largest (peak angle); and calculating the quantified reflected-image diffusibility index value D from the following expression (2), Expression (2):

Reflected-image diffusibility index value D = (luminance at peak angle +1 ° ) + (luminance at peak angle – 1° )/2/(luminance at peak angle).

11. The optical device as claimed in claim 10, wherein the transparent substrate is formed of a soda-lime glass or an alumino-silicate glass.

12. The optical device as claimed in claim 11, wherein at least one of the first and second surfaces of the transparent substrate is subjected to a chemically-strengthening process.

13. The optical device as claimed in one of claims 10 to 12, wherein the first surface of the transparent substrate is subjected to an anti-glare process.

14. The optical device as claimed in claim 13, wherein the anti-glare process includes one of a frosting process, an etching process, a sandblasting process, a wrapping process, and a silica-coating process.

15. The optical device as claimed in one of claims 10 to 14, wherein the display device includes one of an LCD device, an OLED device, a PDP device, an electronic book, and a tablet-type display device.

START

S110

(a) MEASURE LUMINANCE OF TRANSMITTED LIGHT BEAM TRANSMITTED FROM FIRST
SURFACE SIDE OF TRANSPARENT SUBSTRATE BY RADIATING FIRST LIGHT BEAM
IN DIRECTION PARALLEL TO THICKNESS DIRECTION OF TRANSPARENT SUBSTRATE
FROM SECOND SURFACE SIDE OF TRANSPARENT SUBSTRATE AND CHANGING LIGHT
RECEIVING ANGLE IN RANGE FROM −90° TO +90° RELATIVE TO THICKNESS DIRECTION
OF TRANSPARENT SUBSTRATE

S120

(b) OBTAIN ANGLE IN WHICH LUMINANCE OF TRANSMITTED LIGHT BEAM IS LARGEST

S130

(c) CALCULATE RESOLUTION INDEX VALUE T FROM FOLLOWING EXPRESSION (1)

RESOLUTION INDEX VALUE T =
(LUMINANCE OF ALL TRANSMITTED LIGHT BEAMS −
LUMINANCE OF TRANSMITTED LIGHT BEAM AT PEAK ANGLE)
/ (LUMINANCE OF ALL TRANSMITTED LIGHT BEAMS)  EXPRESSION (1)

FIG.1

END

$\theta = 0°$

250

262

214

210

212

$\theta$

264

270

EP 2 980 554 A1

FIG.2

EP 2 980 554 A1

$$\text{START}$$

S210

(a') MEASURE LUMINANCE OF REFLECTED LIGHT BEAM REFLECTED FROM FIRST SURFACE OF TRANSPARENT SUBSTRATE BY RADIATING SECOND LIGHT BEAM IN DIRECTION 30° RELATIVE TO THICKNESS DIRECTION OF TRANSPARENT SUBSTRATE FROM FIRST SURFACE SIDE OF TRANSPARENT SUBSTRATE AND CHANGING LIGHT RECEIVING ANGLE IN RANGE FROM 0° TO +90° RELATIVE TO THICKNESS DIRECTION OF TRANSPARENT SUBSTRATE

S220

(b') OBTAIN ANGLE IN WHICH LUMINANCE OF REFLECTED LIGHT BEAM IS LARGEST

S230

(c') CALCULATE REFLECTED-IMAGE DIFFUSIBILITY INDEX VALUE D FROM FOLLOWING EXPRESSION (2)

REFLECTED-IMAGE DIFFUSIBILITY INDEX VALUE D = ((LUMINANCE AT +1° FROM PEAK ANGLE) + (LUMINANCE AT −1° FROM PEAK ANGLE)) /2/ (LUMINANCE AT PEAK ANGLE)    EXPRESSION (2)

FIG.3

$$\text{END}$$

FIG.4

FIG.5

# FIG.6

EP 2 980 554 A1

FIG.7

# FIG.8

EP 2 980 554 A1

FIG.9

**EP 2 980 554 A1**

## INTERNATIONAL SEARCH REPORT

International application No.

PCT/JP2014/057612

### A. CLASSIFICATION OF SUBJECT MATTER

*G01M11/00*(2006.01)i, *C03C15/00*(2006.01)i, *C03C17/22*(2006.01)i, *C03C19/00* (2006.01)i, *G02B1/11*(2006.01)i, *G02F1/1333*(2006.01)i, *G09F9/00*(2006.01)i

According to International Patent Classification (IPC) or to both national classification and IPC

### B. FIELDS SEARCHED

Minimum documentation searched (classification system followed by classification symbols)
G01M11/00-11/02, C03C15/00, C03C17/22, C03C19/00, G01N21/57, G02B5/02, G02B1/11, G02F1/13, G02F1/1333, G09F9/00, H04N17/00-17/06

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 64-019301 A (Asahi Chemical Industry Co., Ltd.),<br>23 January 1989 (23.01.1989),<br>page 2, upper left column, line 7 to lower right column, line 7; page 6, lower right column, line 12 to page 7, upper left column, line 6; page 9, lower left column, line 16 to lower right column, line 13; fig. 1<br>(Family: none) | 1,4,5-9<br>2<br>3,10-15 |
| Y | JP 2002-277602 A (Fuji Photo Film Co., Ltd.),<br>25 September 2002 (25.09.2002),<br>paragraph [0007]<br>(Family: none) | 2 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 13 June, 2014 (13.06.14) | 01 July, 2014 (01.07.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2014/057612 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2004-333291 A (Fuji Photo Film Co., Ltd.), 25 November 2004 (25.11.2004), entire text; fig. 1 to 9 (Family: none) | 1-15 |
| A | JP 11-352019 A (Sony Corp.), 24 December 1999 (24.12.1999), entire text; fig. 1 to 13 & US 6151125 A | 1-15 |

Form PCT/ISA/210 (continuation of second sheet) (July 2009)

## INTERNATIONAL SEARCH REPORT

International application No.

PCT/JP2014/057612

**Box No. II** Observations where certain claims were found unsearchable (Continuation of item 2 of first sheet)

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III** Observations where unity of invention is lacking (Continuation of item 3 of first sheet)

This International Searching Authority found multiple inventions in this international application, as follows:
(See extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2014/057612

Continuation of Box No.III of continuation of first sheet(2)

Disclosed in Document 1 (JP 64-019301 A (Asahi Chemical Industry Co., Ltd.), 23 January 1989 (23.01.1989), page 2, upper left column, line 7 to lower right column, line 7; page 6, lower right column, line 12 to page 7, upper left column, line 6; page 9, lower left column, line 16 to lower right column, line 13; fig. 1 (Family: none)) is that "when an antireflection method utilizing the scattering of light is employed, for a display device with a smooth transparent plate surface, as countermeasures against ambient light which is mirror reflected thereon and overlaps an image, thereby causing a viewer to view the image with difficulty as well as to have unpleasantness and eyestrain, the antireflection method in which the transparent substrate is provided on a surface thereof with fine bumps and dips so as to scatter light and reduce the clarity of the reflected image, the effects of antireflection and an improvement in the resolution of a transmitted image are contradictory to each other, and an antiglare property measuring device and a screen resolution measuring device are used as an optical property measurement mechanism for an antireflective surface plate."

Consequently, the invention of claim 1 cannot be considered to be novel in the light of the invention disclosed in the document 1, and does not have a special technical feature.

Therefore, multiple invention groups are involved in claims.

Form PCT/ISA/210 (extra sheet) (July 2009)

**EP 2 980 554 A1**

**Patent documents cited in the description**

- JP 2007147343 A
- JP 2013073375 A